# EUROPEAN PATENT APPLICATION

(11) **EP 0 533 489 A1**
(43) Date of publication of application: **24.03.1993**
(21) Application number: 92308525.2
(22) Date of filing: 18.09.1992
(51) Int. Cl.: B64G 1/34

(54) **Satellite stabilized by gravity gradient**

(30) Priority: 19.09.1991 JP 268394/91
(71) Applicant: NEC CORPORATION, Tokyo (JP)
(72) Inventor: Obuchi, Tomoki, c/o NEC Corporation, Tokyo (JP); Nakagawa, Osamu, c/o NEC Corporation, Tokyo (JP)
(74) Representative: Orchard, Oliver John

(57) **Abstract**

The invention relates to a satellite which orbits the Earth or another planet and uses the gradient in the planet's gravity field for passive attitude control. The satellite is a combination of a first satellite body (12) equipped with instruments for operation of the satellite, a second satellite body (14) equipped with at least one instrument (24) for operation of the satellite and an elongate structure called a mast (16) which extends from the first satellite body (12) to the second satellite body (14) when the satellite is in an orbit about the planet. The total weight of the second satellite body (14) including the instrument(s) (24) is adjusted such that the second satellite body (14) serves as a gravitational balancing mass which is necessary for aligning the mast (16) along the direction of the gradient in the planet's gravity field and orienting a specific side of the first satellite body (12) toward the planet. The mast (16) is extensible and contractable to adjust the mast length according to the orbit altitude. Solar cell panels (20) can be mounted on outer surfaces of both the first and second satellite bodies.

## Description

### BACKGROUND OF THE INVENTION

This invention relates to an artificial satellite which orbits the Earth or another planet and uses a gravity gradient stabilization system for attitude control.

In a satellite in an orbit about the Earth an attitude control system is required to maintain orientation with respect to the Earth. In general, active attitude control systems are employed in relatively large satellites and passive attitude control systems in relatively small satellites for relatively simple missions.

As to passive control of attitude of a satellite it is known to use a gravity gradient stabilization system, which utilizes the fact that a long slender body in space tends to align itself along the direction of the gradient in the Earth's gravity field, i.e. along the direction in which the gravity field is changing. Since the gravity field becomes weaker as one moves away from the Earth, a long body in orbit will always point toward the center of the Earth. Therefore, by extending a long boom from the satellite body and attaching a small mass to the extended tip of the boom for gravitational balancing, the satellite can be made to orient a specific side thereof toward the Earth. The orientation toward the Earth is attributed to a gravity gradient torque which is produced by a deviation of the point of action of centrifugal force on the satellite having the long boom with the tip mass from the center of gravity of the satellite. For example, the gravity gradient stabilization system was used in UoSAT satellites developed by the University of Surrey, Britain.

The employment of the gravity gradient stabilization system offers some disadvantages or inconveniences to the satellite. First, the balancing mass at the tip of the boom is a mere weight and adversely affects the payload efficiency. In the case of UoSAT-1 satellite the balancing mass was about 2.6 kg, which amounted to about 6% of the gross weight of the satellite, about 45 kg. Next, the boom needs to have a considerable length since the mass at the boom tip is limited. In the case of UoSAT-1 the boom had a length of about 13 m with the aim of attitude control accuracy of ±1°. It is not always easy to retract such a long boom into the satellite body for installation on a launch vehicle. Besides, due to restrictions on the configuration of the satellite body it is impossible to provide the satellite with paddles to increase solar cell panels.

### SUMMARY OF THE INVENTION

It is an object of the present invention to provide a gravity gradient stabilized satellite, which is improved in the payload efficiency, in the ease of installation on a launch vehicle and in the accuracy of attitude control and can be equipped with an increased number of solar cell panels.

The present invention provides an artificial satellite to orbit a planet, the satellite comprising a first satellite body equipped with instruments for operation of the satellite, a second satellite body which is equipped with at least one instrument for operation of the satellite and a mast which extends from the first satellite body to the second satellite body to keep the first and second satellite bodies at a predetermined distance from each other and mechanically connect the first and second satellite bodies to each other. In this satellite the gross weight of the second satellite body including the instrument(s) is adjusted such that the second satellite body serves as a gravitational balancing mass to stabilize the satellite in an orbit about the planet by using the gradient in the gravity field of the planet.

Thus, according to the invention the fundamental structure of a satellite is divided into two satellite bodies both of which carry at least one instrument for operation of the satellite, and one of the two satellite bodies is used as a gravitational balancing mass at the tip of the mast, or boom, necessary for attitude control by using the gravity gradient. By this unique arrangement the payload efficiency of the satellite is considerably improved. Furthermore, in this invention the mast connecting the two satellite bodies can have a relatively short length since the second satellite body can have a relatively large mass compared to a mere weight in a conventional gravity gradient stabilization system, and it is possible to improve the accuracy of attitude control even though the mast length is shortened. Of course a short mast is convenient for installation of the satellite on a launch vehicle.

It is possible and preferable to make the mast in this invention extensible and contractable. By using an extensible and contractable mast it becomes possible to adjust the effective length of the mast according to the orbit altitude and consequently enhance the attitude accuracy.

Besides, it is possible to mount solar cell panels on the outer surfaces of the second satellite body in addition to solar cell panels mounted on the outer surfaces of the first satellite body. That is, the satellite can meet a demand for the supply of increased electric power.

### BRIEF DESCRIPTION OF THE DRAWINGS

Fig. 1 is an elevational view of a satellite which is an embodiment of the invention;
Fig. 2 is an exploded and schematic illustration of the satellite of Fig. 1; and
Figs. 3 to 5 are graphs with respect to a model satellite according to the invention in an orbit about the Earth. Fig. 3 shows the dependence of disturbance torques and gravity gradient torque on the length of the mast of the satellite; Fig. 4 shows the dependence of the accuracy of attitude of the satellite on the length of the mast; and Fig. 5 shows the dependence of the accuracy of attitude on the weight proportions of the two satellite bodies at a fixed length of the mast.

### DESCRIPTION OF THE PREFERRED EMBODIMENTS

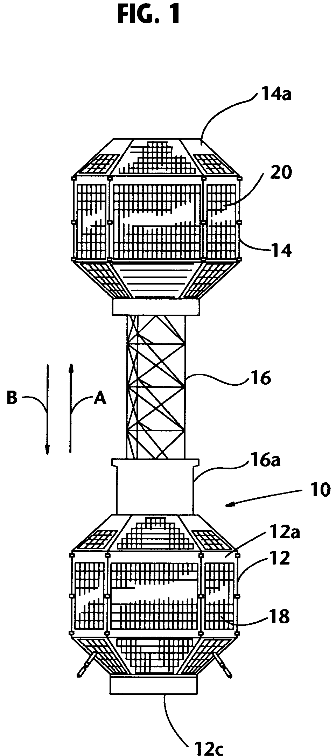

Fig. 1 shows a satellite 10 as an embodiment of the invention. The satellite 10 is a combination of a first satellite body 12, a second satellite body 14 and an elongate structure 16, herein called a mast, by which the two bodies 12 and 14 are mechanically connected to each other. The mast 16 is extensible in the direction of arrow A and contractable in the direction of arrow B. The mast 16 includes a casing part 16a which is fixed to a top side of the first body 12, and by contraction the remaining major part of the mast 16 can be confined in the casing part 16a. The first body 12 is the primary part of the satellite 10. The mast 16 and the second body 14 are provided to stabilize the satellite 10 in an orbit about the Earth by using the gradient in the Earth's gravity field.

The first satellite body 12 has a polyhedral shape, and solar cell panels 18 are mounted on the outer surfaces 12a of the satellite body 12. The second satellite body 14 also has a polyhedral shape, and solar cell panels 20 are mounted on the outer surfaces 14a of the satellite body 14. In this satellite 10 the first and second bodies 12 and 14 are of nearly the same shape and nearly the same size, so that the satellite 10 has a dumbbell-like configuration. However, this is merely by way of example. The two satellite bodies 12 and 14 may be different in shape and/or size.

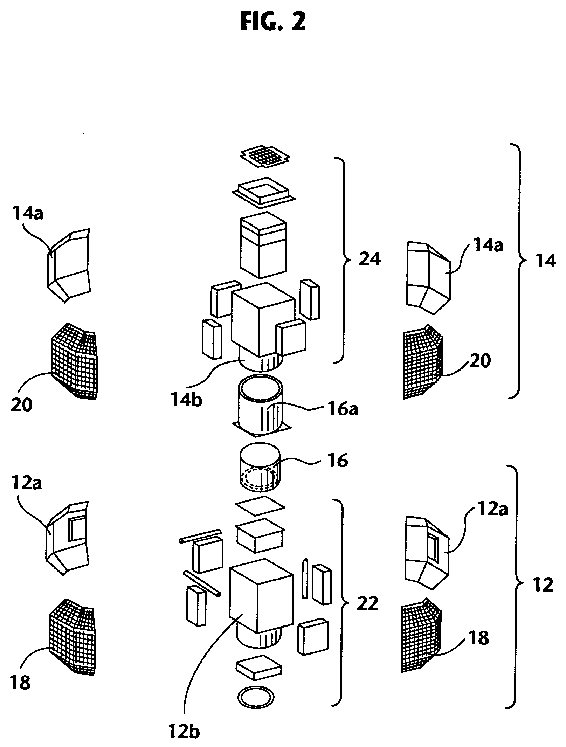

Referring to Fig. 2, the first satellite body 12 has a base structure 12b and contains several instruments 22 for operation of the satellite 10. For example, the instruments 22 include power sub-systems, computers, controls, observation instruments and antennas. The second satellite body 14 has a base structure 14b and contains several instruments 24 for operation of the satellite 10. For example, the instruments 24 include communications instruments and antennas.

If desired, it is possible to extremely simplify the second satellite body 14 so as to merely mount a solar cell panel, or panels, to the outer surface without installing any other instrument in the body 14.

The total weight of the second satellite body 14 including the instruments 24 and the solar cell panels 20 are adjusted such that the entirety of the second satellite body 14 serves as a gravitational balancing mass at the extended end of the mast 16 to keep the bottom side 12c of the first satellite body 12 oriented toward the Earth when the satellite 10 is in an orbit about the Earth. Until the satellite 10 is placed in the orbit the mast 16 is kept contracted and confined in the casing part 16a.

In the orbit the mast 16 is extended in the direction of arrow A until the extended mast 16 has a specific length which is predetermined according to the orbit altitude. If the orbit altitude changes to such an extent that the accuracy of attitude of the satellite 10 becomes insufficient, it is possible to change the length of the mast 16 by appropriate extension or contraction.

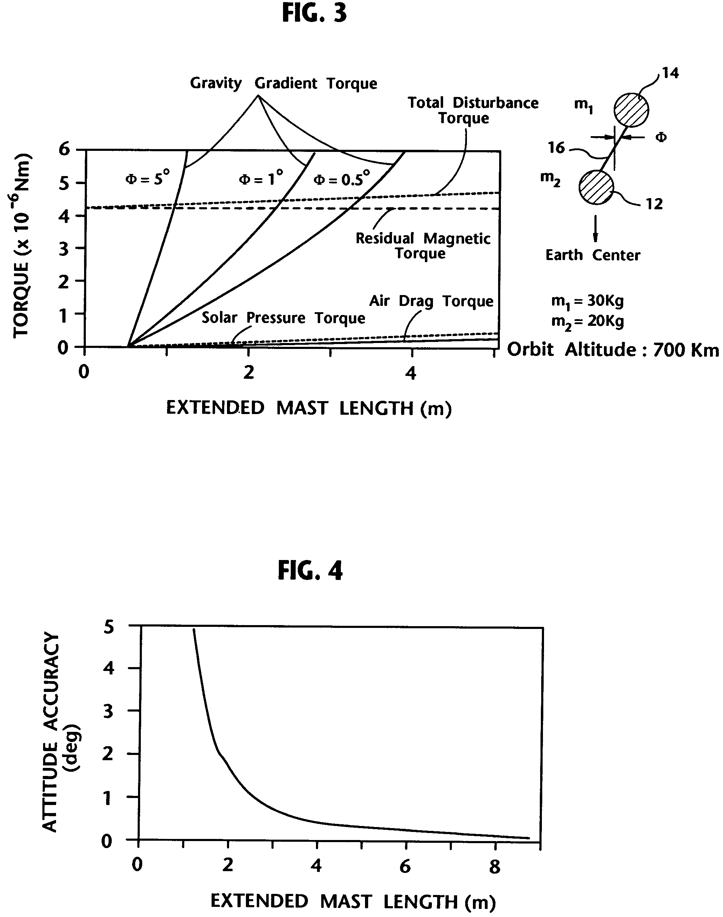

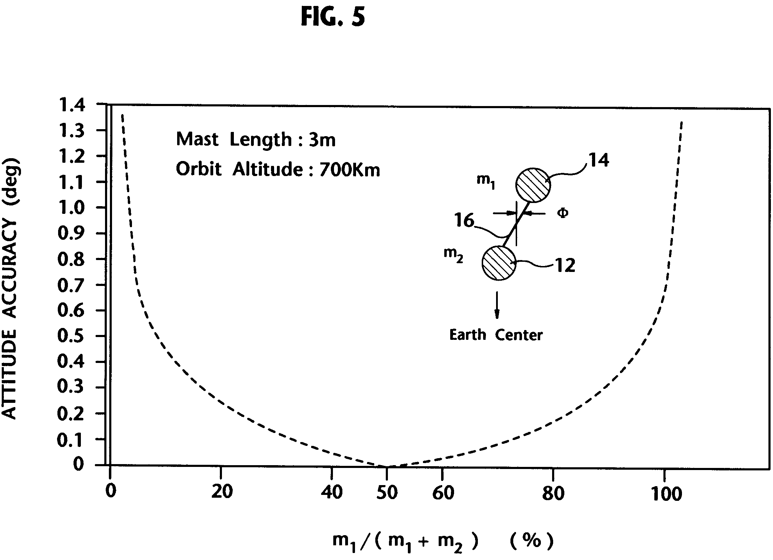

In an orbit about the Earth the satellite 10 is subject to disturbance torques such as residual magnetic torque, solar radiation pressure torque and air drag torque. To accomplish attitude control of the satellite 10 by using the gradient in the gravity field the satellite 10 must produce a gravity gradient torque which is greater than the total of the disturbance torques, and the attitude accuracy depends on the ratio of the total disturbance torque to the gravity gradient torque per unit angle. With respect to a model satellite according to the invention which is 30 kg in the total weight m₁ of the second body 14 and 20 kg in the total weight m₂ of the first body 12 and is in an orbit about the Earth at 700 km altitude, the relationship between the length of the extended mast 16 and the gravity gradient torque is as shown in Fig. 3. That is, the gravity gradient torque becomes greater as the mast 16 is made longer and as the angle φ of inclination of the mast 16 with the direction of gravity becomes greater. By calculation with respect to the same model in the same orbit, the attitude accuracy depends on the length of the extended mast 16 in the manner as shown in Fig. 4. However, the attitude accuracy depends also on the proportion of the weight of the second satellite body 14 to the total weight of the two bodies 12 and 14, and therefore it is possible to make the attitude accuracy sufficiently high even by using a relatively short mast. For example, when the extended mast 16 of the same model has a constant length of 3 m at the orbit altitude of 700 km, the relationship between the weight proportion and the attitude accuracy becomes as shown in Fig. 5. That is, the attitude accuracy reaches 0 degree when the two satellite bodies 12 and 14 are equal in weight, and the attitude accuracy lowers as an unbalance between the weights of the two bodies 12 and 14 augments.

## Claims

1. An artificial satellite to orbit a planet, comprising:
a first satellite body equipped with instruments for operation of the satellite;
a second satellite body which is equipped with at least one instrument for operation of the satellite; and
a mast which extends from said first satellite body to said second satellite body to keep the first and second satellite bodies at a predetermined distance from each other and mechanically connect the first and second satellite bodies to each other, the gross weight of said second satellite body including said at least one instrument being adjusted such that said second satellite body serves as a gravitational balancing mass to stabilize the satellite in an orbit about the planet by using the gradient in the gravity field of the planet.

2. A satellite according to Claim 1, wherein said mast is extensible and contractable so that said predetermined distance is variable.

3. A satellite according to Claim 2, wherein said second satellite body has at least one solar cell panel which is mounted on an outer surface of the body.

4. A satellite according to Claim 3, wherein said first satellite body has at least one solar cell panel which is mounted on an outer surface of the body.

5. A satellite according to Claim 1, wherein said second satellite body has at least one solar cell panel which is mounted on an outer surface of the body.

6. A satellite according to Claim 5, wherein said first satellite body has at least one solar cell panel which is mounted on an outer surface of the body.

7. A satellite according to Claim 1, wherein said planet is the Earth.
